# FASCICULE DE BREVET EUROPEEN

(11) **EP 3 703 958 B1**
(45) Date de publication et mention de la délivrance du brevet: **18.08.2021**
(21) Numéro de dépôt: 18808439.6
(22) Date de dépôt: 31.10.2018
(51) Int. Cl.: B60C 11/03, B60C 11/12, B60C 11/13

(54) **BANDE DE ROULEMENT POUR PNEU DE VÉHICULE POIDS LOURD**
LAUFFLÄCHE FÜR EINEN SCHWERLASTFAHRZEUGREIFEN
TREAD FOR A HEAVY-DUTY VEHICLE TYRE

(30) Priorité: 31.10.2017 FR 1760285
(43) Date de publication de la demande: 09.09.2020
(73) Titulaire: Compagnie Générale des Etablissements Michelin, 63000 Clermont-Ferrand (FR)
(72) Inventeur: BARDIN, Damien, 63040 Clermont-Ferrand Cedex 9 (FR)
(74) Mandataire: Millanvois, Patrick Jacques Jean
(86) Numéro de dépôt international: PCT/FR2018/052701
(87) Numéro de publication internationale: WO 2019/086809

(56) Documents cités:
- WO-A1-2017/103461
- FR-A1- 2 995 253
- JP-A- 2008 260 438

## Description

### DOMAINE DE L'INVENTION

L'invention concerne une bande de roulement pour pneu de véhicule poids lourd.

### ÉTAT DE LA TECHNIQUE

De façon connue, des conditions de roulage par temps de pluie requièrent une élimination la plus rapide possible de l'eau entre la bande de roulement de chaque pneu et la chaussée afin d'assurer le contact de la bande de roulement avec la chaussée. L'eau qui n'est pas repoussée sur l'avant du pneu s'écoule en partie dans les rainures et les incisions formées dans la bande de roulement du pneu que ces rainures et incisions soient orientées dans la direction circonférentielle ou la direction transversale ou encore dans une direction oblique intermédiaire entre les deux précédentes directions.

### Définitions

Par découpure, on entend toute cavité ou creux réalisé notamment par moulage dans une bande de roulement, cette découpure s'étendant à la fois selon une direction principale qui est la direction d'écoulement de l'eau dans la découpure par temps de pluie et dans la profondeur de la bande de roulement.

Par rainure ouverte, on entend une découpure ouverte sur une surface de roulement destinée à être en contact avec la chaussée, cette découpure ayant une largeur moyenne appropriée pour que les parois de matière qui la délimitent ne soient jamais en contact l'une avec l'autre dans les conditions normales d'utilisation du pneu.

Par incision, on entend ici une découpure mince ayant une largeur moyenne faible et telle que, sous les conditions normales d'usage du pneu, les parois de matière la délimitant puissent venir, au moins partiellement, en contact l'une sur l'autre lors du passage dans la région de contact avec la chaussée.

Par partie cachée, on entend une cavité ou un canal formé au moins en partie sous la surface de roulement à neuf, cette cavité ou ce canal étant destiné à former une nouvelle rainure ouverte sur la surface de roulement après une usure partielle prédéterminée. Une partie cachée est délimitée par deux parois latérales en vis-à-vis, ces deux parois latérales étant reliées entre elles par une partie inférieure formant un fond reliant les deux parois radialement vers l'intérieur et par une partie supérieure dans le prolongement de ces parois radialement vers l'extérieur. Dans cette partie supérieure une incision peut s'ouvrir pour relier la partie cachée à la surface de roulement à neuf. Vue en coupe, une partie cachée peut prendre toute forme géométrique notamment circulaire, rectangulaire...

Par épaisseur de matière à user d'une bande de roulement, on entend l'épaisseur de matière de cette bande de roulement pouvant être usée en roulage avant d'atteindre une limite légale d'usage, cette limité étant repérée par des indicateurs d'usure formés notamment dans les rainures.

Dans la présente description, on utilise les termes radial ou radialement pour indiquer une direction qui, lorsqu'elle est prise sur le pneu, est une direction perpendiculaire à l'axe de rotation du pneu tandis que, lorsqu'elle est prise sur une bande de roulement seule, elle correspond à la direction de l'épaisseur de ladite bande.

Par ailleurs, on utilise le terme circonférentiel pour indiquer une direction qui, correspond à une direction tangente à tout cercle centré sur l'axe de rotation du pneu. Cette direction circonférentielle correspond à la direction longitudinale de la bande de roulement, cette dernière étant formée à la manière d'une bande plane avant son incorporation dans la fabrication d'un nouveau pneu ou dans le rechapage d'un pneu usagé.

Quelle que soit la catégorie de pneu (c'est-à-dire que ce soit un pneu équipant un véhicule de tourisme ou un véhicule de type poids lourd destiné à porter de lourdes charges), la bande de roulement doit présenter une performance en drainage de l'eau présente sur la route qui se situe toujours au-dessus d'une performance minimale dite performance de sécurité. En conséquence et compte tenu de l'usure progressive de la bande de roulement qui réduit progressivement les surfaces de sections transversales des rainures et par conséquent la capacité de ces rainures à évacuer un volume de liquide, il est usuel de réaliser des rainures débouchant sur la surface de roulement à l'état neuf et se prolongeant dans l'épaisseur de la bande jusqu'à au moins un niveau qui correspond à une limite légale d'usure nécessitant le retrait de la bande.

La réalisation d'une pluralité de rainures ouvertes sur la surface de roulement d'une bande de roulement a pour inconvénient de réduire la quantité de matière pour une largeur donnée de bande de roulement et par voie de conséquence de réduire très sensiblement les rigidités de la bande de roulement ce qui a une incidence sur la performance en usure. Il en résulte que pour faire face aux sollicitations subies par la bande lors d'un roulage, la personne du métier doit prévoir de compenser ces réductions de rigidité par tout moyen à sa disposition notamment en adaptant la structure interne du pneu ce qui, bien entendu, n'est pas sans incidence sur le prix de revient du pneu lui-même. Ces diminutions de rigidité peuvent en outre affecter la vitesse d'usure, la régularité de cette usure et certaines des performances attendues en roulage.

Par ailleurs, on constate une augmentation de la résistance au roulement qui est liée à une plus grande déformabilité de la bande de roulement, ce qui se traduit par une augmentation sensible de la consommation des véhicules équipés de tels pneus.

Il a été proposé dans le document EP2483087-B1 de former dans une bande de roulement des rainures ayant la particularité de s'ouvrir de manière discontinue sur la surface de roulement de la bande à l'état neuf. Ce type de rainure peut être désignée comme étant une rainure ondulante, c'est à dire présentant une géométrie ondulant dans l'épaisseur de la bande tout en s'ouvrant régulièrement sur la surface de roulement. Cette rainure ondulante dans la direction de l'épaisseur d'une bande de roulement peut être formée soit dans la direction circonférentielle soit dans toute autre direction. Comme il est décrit dans le document EP2483087-B1**,** une rainure ondulante est continue à l'état initial (état correspondant à l'état neuf de la bande), ce qui permet d'assurer, en roulage sur chaussée revêtue d'eau, une capture de l'eau dans les parties de rainure s'ouvrant sur la surface de roulement lors du passage dans le contact avec la chaussée, l'eau ainsi captée circulant dans la rainure ondulante en partie sous la surface de roulement. Le liquide ainsi capté est ensuite éjecté en dehors de la région de contact sous l'effet des forces centrifuges. Ce même document décrit la possibilité, à l'image des dessins de sculpture antérieurs, de réaliser des connexions entre au moins deux rainures ondulantes de ce type pour former une sorte de réseau de drainage.

Il existe d'autres documents, tel notamment WO2017103461 A1**,** JP2008260438 A**,** FR2995253 A1 ou EP 2323858 B1**,** qui préconisent la formation de creux cachés formés en totalité sous la surface de roulement de la bande de roulement à neuf, ces creux cachés étant prolongés vers la surface de roulement par une incision pouvant être de géométrie plane ou ondulée. Avec ce type de pneu il est possible de renouveler une partie plus ou moins importante du volume de drainage initial lorsque la bande a atteint un niveau d'usure prédéterminé.

Sur certains pneus, il a été réalisé une combinaison de rainures ouvertes sur la surface de roulement à neuf et de rainures comportant au moins une partie cachée à l'intérieur de la bande de roulement, cette au moins une partie cachée étant prolongée vers la surface de roulement par une incision. Lorsque une rainure ouverte sur la surface de roulement à neuf est connectée dans une région de connexion avec une partie cachée d'au moins une rainure comportant des parties cachées, il a pu être observé une usure irrégulière, c'est à dire une usure localisée sur cette région de connexion. Cette usure irrégulière peut être la cause d'un retrait prématuré du pneu.

### BREF EXPOSE DE L INVENTION

La présente invention s'attache à proposer une solution à ce problème d'usure irrégulière pouvant intervenir avant qu'une nouvelle rainure soit formée par l'ouverture d'une partie de rainure cachée sous la surface de roulement d'une bande de roulement neuve pour pneu de véhicule poids lourd.

À cet effet, l'invention a pour objet une bande de roulement pour pneu de véhicule poids lourd telle que couverte par la revendication indépendante 1. La bande de roulement a une épaisseur totale Eb correspondant à l'épaisseur de matière à user en roulage. Cette bande de roulement a une surface de roulement à neuf destinée à venir en contact avec une chaussée lors du roulage d'un pneu pourvu de cette bande. Cette surface de roulement change avec l'usure générée par le roulage.

La bande de roulement selon l'invention comprend au moins une découpure évolutive de profondeur maximale Pc au moins égale à l'épaisseur de matière à user, cette découpure évolutive comportant au moins une partie cachée à l'intérieur de la bande de roulement, cette partie cachée, de largeur maximale Lc et de hauteur Hc, étant prolongée vers la surface de roulement par une incision s'ouvrant sur cette surface de roulement. La partie cachée est délimitée par des parois en vis-à-vis distantes l'une de l'autre d'une largeur maximale Lc, ces parois se prolongeant vers la surface de roulement en délimitant une incision de largeur appropriée pour réaliser un contact au moins partiel entre lesdites parois lors du passage dans le contact avec la route. L'incision précitée peut prendre toute forme géométrique appropriée, notamment présenter des zigzags ou ondulations dans sa profondeur. Cette incision s'ouvre dans la partie cachée de manière à être en décalage par rapport à l'une des parois en vis-à-vis délimitant la partie cachée pour ainsi former au moins un pont de matière radialement au-dessus de ladite partie cachée.

Cette bande de roulement comprend en outre une pluralité de rainures ouvertes à neuf sur la surface de roulement de la bande de roulement, ces rainures ouvertes ayant à neuf une profondeur Pg et une largeur moyenne Lg sur la surface de roulement. Ces rainures ouvertes à neuf comprennent deux extrémités et s'ouvrent à au moins une de leurs extrémités dans une découpure évolutive, c'est à dire à la fois dans la partie cachée de la découpure évolutive et dans l'incision prolongeant cette partie cachée pour former une région de connexion.

L'invention se caractérise par la présence d'une protubérance formée localement, c'est à dire dans la région de connexion, sur une paroi de la partie cachée de la découpure évolutive, chaque protubérance s'étendant sur toute la hauteur Hc de la partie cachée et sur une longueur Lp mesurée dans la direction principale de la partie cachée et une épaisseur maximale Ep de manière à servir de soutien au pont de matière situé radialement au-dessus de la partie cachée dans la région de connexion tout en conservant une ouverture de section différente de zéro sur la partie cachée.

Préférentiellement, l'épaisseur maximale Ep de chaque protubérance est au moins égale à 75% de la largeur du pont de matière situé radialement au-dessus de la partie cachée dans la région de connexion respective. Encore plus préférentiellement cette épaisseur maximale est égale à la largeur dudit pont de matière.

Préférentiellement, chaque protubérance présente une section transversale telle que l'ouverture sur la partie cachée est au moins égale à 20% de la surface transversale de la partie cachée. L'ouverture sur la partie cachée correspond à la section de la partie cachée qui est connectée avec la rainure ouverte dans la région de connexion. Si la protubérance occupe en totalité la section transversale de la partie cachée, il n'y a plus de possibilité d'écoulement fluidique entre la rainure et la partie cachée d'une découpure évolutive.

Grâce à ce moyen, il est possible de maintenir une ouverture suffisante de la partie cachée de part et d'autre de la protubérance afin de permettre un écoulement des fluides dans cette partie cachée et dans la rainure ouverte sur la surface de roulement à neuf. Par ailleurs, la présence de cette protubérance génère un support/renfort mécanique à la matière présente entre la surface de roulement et la partie cachée dans la région de connexion entre la rainure ouverte sur la surface de roulement et la découpure évolutive.

Grâce à cette invention, il est possible d'augmenter très localement la rigidité de la bande de roulement au voisinage de chaque partie cachée dans une phase d'usure assez proche de la formation d'une nouvelle rainure ouverte sur la surface de roulement. Cette modification locale de rigidité assure un meilleur comportement en usure et il est ainsi possible d'obtenir un profil d'usure de la bande de roulement plus régulier avant l'apparition d'une nouvelle rainure comparativement à une bande de roulement dépourvue de protubérances telles que définies.

Dans une variante de l'invention chaque protubérance comprend des parties latérales se prolongeant de part et d'autre de la région de connexion respective pour former des parties d'épaisseur variable afin de limiter les perturbations de l'écoulement dans la partie cachée de la découpure évolutive.

Dans une autre variante de l'invention, un pont de matière est formé dans chaque rainure ouverte sur la surface de roulement, chaque pont de matière ayant une hauteur comprise entre 30% et 70% de la profondeur Pg de la rainure et une longueur Lp mesurée dans la direction de la rainure ouverte qui est au plus égale à 75% de la longueur de ladite rainure.

Ce pont de matière génère une rigidité supplémentaire dans une région proche de la région de connexion entre la rainure et la découpure évolutive. Il est ainsi possible d'homogénéiser les rigidités dans la bande de roulement. Avantageusement, une incision peut couper le pont de matière en deux parties.

Dans une autre variante de l'invention, il peut être formé une incision dans le prolongement de la rainure venant se connecter avec une découpure évolutive, cette incision s'ouvrant sur la surface de roulement à neuf et pouvant se prolonger jusqu'à la protubérance formée dans la région de connexion.

Ce même principe d'invention peut être appliqué à une bande de roulement pour pneu de véhicule poids lourd ayant une découpure évolutive dont la partie cachée est ondulante dans la direction de l'épaisseur de la bande de roulement, à l'image de la découpure décrite dans le document EP2483087-B1**.**

D'autres avantages de l'invention ressortent de la description faite ci-après en référence aux dessins annexés qui montrent, à titre d'exemple non limitatif, des formes de réalisation de l'objet de l'invention.

### BREVE DESCRIPTION DES FIGURES

La figure 1 montre une vue générale de la surface extérieure d'une première variante de bande de roulement à l'état neuf selon l'invention ;
La figure 2 montre une coupe partielle selon un plan de coupe dont la trace est montrée par la ligne II-II sur la figure 1 ;
La figure 3 montre une coupe partielle selon un plan de coupe dont la trace est montrée par la ligne III - III sur la figure 1 ;
La figure 4 montre la surface de roulement de la bande de roulement de la première variante après usure partielle ;
La figure 5 montre une vue en coupe d'une deuxième variante selon l'invention.

### DESCRIPTION DES FIGURES

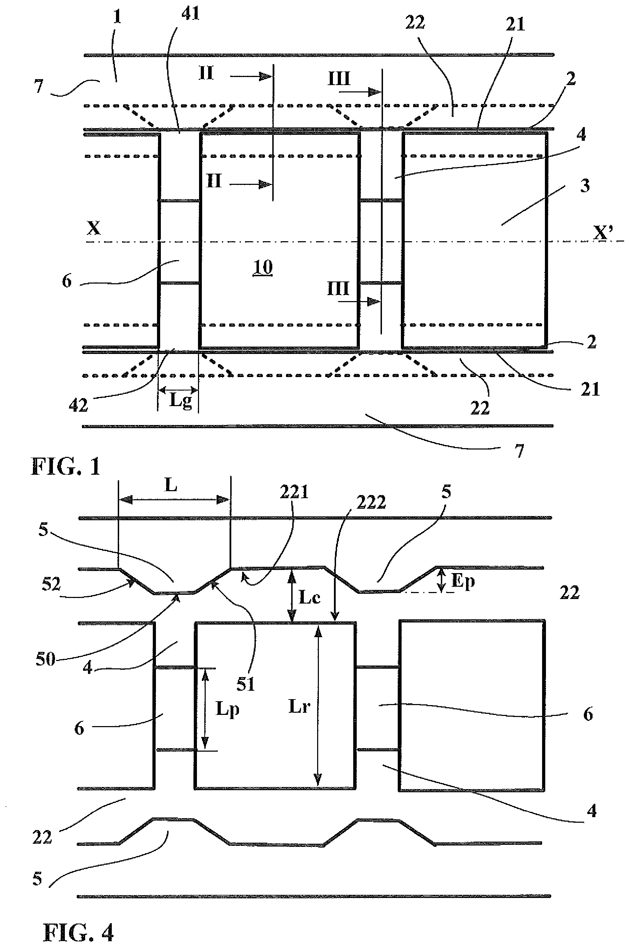

La première variante illustrant l'invention est relative à une bande de roulement 1 d'un pneu de dimension 11 R 22.5 pour équiper un véhicule poids-lourd. Cette bande de roulement 1 comprend, comme cela est visible sur la figure 1, une surface de roulement 10 destinée à venir en contact avec la route lors du roulage.

Cette bande de roulement 1 comprend deux découpures évolutives 2 d'orientation circonférentielle s'ouvrant sur la surface de roulement à neuf par des incisions 21 de largeur appropriée pour avoir leurs parois en vis-à-vis en contact au moins partiel lors du passage dans le contact avec la route. La largeur moyenne de ces incisions 21 sur la surface de roulement 10 à neuf est dans le cas présent égale à 1 mm. Ces deux découpures évolutives 2 délimitent entre elles une région centrale 3 s'étendant de part et d'autre du plan médian de la bande de roulement dont la trace est indiquée par la direction XX' sur la figure 1. De part et d'autre de cette région centrale 3, il est formé des nervures circonférentielles 7 délimitant axialement la bande de roulement 1.

Chaque découpure évolutive 2 a une profondeur maximale Pc égale à 19 mm et comprend une partie cachée 22 formant un canal totalement caché sous la surface de roulement à neuf 10. Chaque canal caché 22 est destiné à former une nouvelle rainure ouverte sur la surface de roulement de la bande de roulement après une usure partielle prédéterminée.

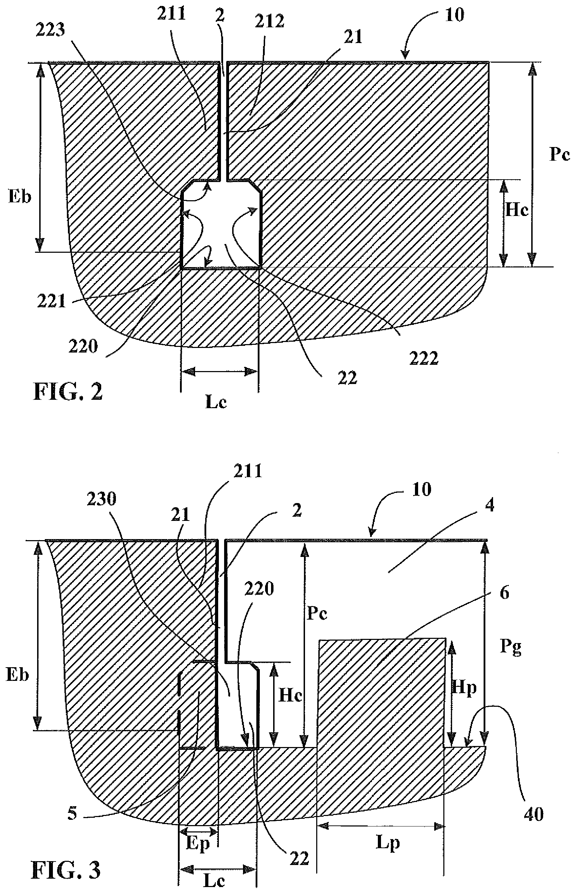

Dans le cas présent, et comme cela est visible avec la figure 2 montrant une coupe transversale selon un plan dont la trace sur la figure 1 est indiquée par la ligne II-II, la partie cachée 22 est de section sensiblement rectangulaire de hauteur Hc (ici égale à 7 mm) et de largeur maximale Lc (ici égale à 4.5 mm). Cette partie cachée 22 comprend deux parois en vis-à-vis 221, 222, ces parois étant reliées par un fond 220 radialement à l'intérieur et par un sommet 223 radialement à l'extérieur. Dans le cas décrit, l'incision 21 coupe le sommet 223 de la partie cachée 22 en deux parties d'égales largeurs. On distingue qu'il est formé, de part et d'autre de l'incision 21, des ponts de matière 211, 212, chaque pont de matière venant en contact avec le pont de matière en vis-à-vis lors de la fermeture de l'incision 21 au passage dans le contact avec la chaussée.

Par ailleurs, on voit à la figure 1 que la bande de roulement comprend une pluralité de rainures ouvertes 4 sur la surface de roulement à neuf 10, ces rainures ouvertes 4 étant orientées transversalement c'est à dire parallèlement à la direction axiale du pneu (perpendiculaire à la direction repérée par l'axe XX' sur la figure 1). Chaque rainure ouverte transversale 4 a une largeur Lg sur la surface de roulement à neuf 10 égale à 12 mm et une profondeur Pg égale à 19 mm.

Chacune de ces rainures ouvertes transversales 4 se termine sur les découpures évolutives 2 à ses deux extrémités pour former deux régions de connexion 41, 42. Ces régions de connexion 41, 42 permettent une circulation fluidique à l'intérieur des rainures ouvertes 4 transversales et des parties cachées 22 des découpures évolutives.

La figure 3 montre, dans un plan de coupe dont la trace est repérée par la ligne III-III sur la figure 1, la présence, dans chaque région de connexion, d'une protubérance 5 formée sur la paroi latérale 221 de la partie cachée 22 (l'autre paroi 222 ayant été supprimée localement par la présence de la rainure transversale 4). Dans le cas décrit, cette protubérance 5 occupe la totalité de la largeur du pont de matière 211 encore présent (l'autre pont de matière ayant été supprimé par la présence de la rainure transversale 4) et a une épaisseur Ep constante sur toute sa hauteur. Ainsi, il est conservé une ouverture 230 sur la partie cachée 22 mettant en communication la rainure ouverte transversale 4 et ladite partie cachée 22.

Ainsi cette protubérance 5, sans fermer en totalité la partie cachée 22, offre un support mécanique au pont de matière 211 existant entre la partie cachée 22 et la surface de roulement 10 dans la région de connexion 41 entre la découpure évolutive 2 et la rainure ouverte transversale 4.

Lorsqu'on regarde la figure 4 montrant une vue de la surface de roulement après une usure partielle suffisante pour que les parties cachées soient ouvertes sur la surface de roulement et forment de nouvelles rainures circonférentielles, on peut voir que la protubérance 5 a une épaisseur maximale Ep (dans le cas présent : 2.25 mm) égale à la moitié de la largeur maximale Lc de la partie cachée et qu'elle a une longueur totale L (ici égale à 11.5 mm), cette dernière longueur étant mesurée à sa base sur la surface de la paroi 221 de la partie cachée 22. Cette même protubérance 5 présente une face latérale avant 50 occupant toute la largeur de la rainure transversale 4 dans le cas présent. Cette face latérale avant 50 est prolongée de part et d'autre par des faces latérales 51, 52 d'extrémité inclinées et reliées à la paroi 221 de la partie cachée 22 de la découpure évolutive.

Les valeurs numériques ne sont données qu'à titre d'illustration de l'exemple décrit, et il est bien sûr possible à la personne du métier d'adapter chacune de ces dimensions pour chaque cas d'espèce en fonction des besoins techniques.

Dans cette première variante, il a en outre été prévu un pont 6 de matière formé à partir du fond 40 de chaque rainure transversale 4 et s'élevant sur une hauteur Hp égale dans l'exemple décrit à 50% de la profondeur de la rainure 4 à neuf (soit 9.5 mm) comme cela est visible notamment sur la figure 3. La longueur Lp de ce pont de matière 6 mesuré selon la direction principale de la rainure transversale 4 est dans l'exemple décrit de l'ordre de 50% de la longueur Lr de ladite rainure transversale. Pour adapter les rigidités locales, il est possible de pourvoir ce pont de matière avec une incision parallèle aux parois délimitant la rainure ouverte dans laquelle le pont est formé. Cette même incision peut se prolonger dans la protubérance formée dans la région de connexion entre la rainure ouverte et la partie cachée de la découpure évolutive.

Ce qui a été décrit sur une extrémité de la rainure ouverte transversale 4 se retrouve sur l'autre extrémité.

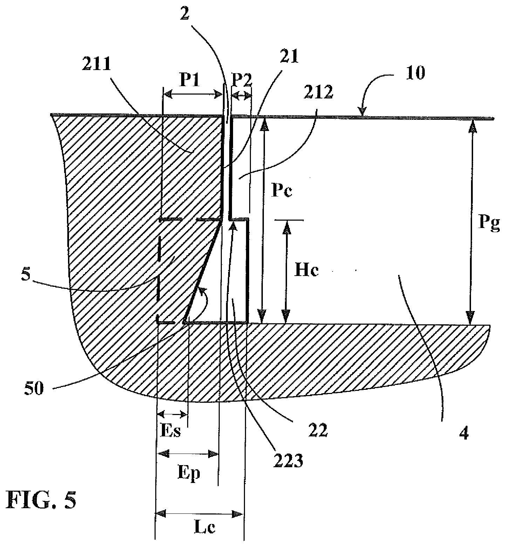

Une deuxième variante est montrée avec la figure 5 selon laquelle l'incision 21 prolongeant la partie cachée 22 vers la surface de roulement à neuf 10 est excentrée sur la face sommet 223 de ladite partie cachée 22. Dans cette variante, les ponts de matière 211, 212 formés de chaque côté de l'incision 21 et radialement à l'extérieur de la partie cachée 22 de la découpure évolutive 2 n'ont pas les mêmes largeurs P1, P2. Dans l'exemple décrit, la largeur P1 du pont de matière 211 qui demeure dans la région de connexion avec la rainure ouverte transversale 4 est supérieure à la largeur P2 de l'autre pont de matière 212.

Pour bénéficier d'un support mécanique suffisant tout en conservant une ouverture appropriée sur la partie cachée 22, il est formé une protubérance 5 qui occupe toute la largeur P1 du pont de matière 211 au sommet 223 de la partie cachée et une largeur Es sur le fond de ladite partie cachée, cette largeur Es étant sensiblement égale à 50% de la largeur P1 du pont de matière 211. La protubérance 5 comprend une face latérale 50 faisant face à la rainure ouverte 4 qui est en contre dépouille. La largeur maximale Ep de la protubérance 5 est ici égale à la largeur P1 du pont 211. La face latérale 50 qui est ici plane et inclinée peut bien entendu être adaptée et prendre une forme convexe ou concave.

De préférence comme représenté à la figure 1, une protubérance 5 est formée dans chacune des régions de connexion (41, 42) de la bande de roulement. Cependant, selon la configuration de la bande de roulement, un certain nombre de régions de connexion peuvent être également dépourvues d'une telle protubérance dans la mesure ou au moins 50% des régions de connexion en sont effectivement pourvues.

Dans une variante non représentée ici, la protubérance peut être formée de manière à s'élargir en allant vers le fond de la partie cachée ; dans cette dernière variante, on réduit le risque lié à la capture d'objets étrangers, tels des cailloux, dans la partie cachée.

L'invention n'est pas limitée aux deux exemples présentés et diverses modifications peuvent y être apportés sans sortir de son cadre tel que défini par les revendications. Notamment, ce qui a été décrit avec des découpures évolutives circonférentielles pourrait s'appliquer à toute autre orientation et notamment transversale ou oblique. De même les rainures ouvertes à neuf sur la surface de roulement pourraient être orientées obliquement par rapport à la direction des découpures évolutives.

## Revendications

1. Bande de roulement (1) pour pneu de véhicule poids lourd ayant une surface de roulement (10) à neuf destinée à venir en contact avec une chaussée lors du roulage, cette bande de roulement (1) comprenant au moins une découpure évolutive (2) de profondeur maximale Pc, la au moins une découpure évolutive (2) comportant au moins une partie cachée (22) à l'intérieur de la bande de roulement (1), la au moins une partie cachée (22) de hauteur Hc et délimitée par des parois (221 , 222) en vis-à-vis distantes l'une de l'autre d'une largeur maximale Lc, la au moins une partie cachée (22) étant prolongée vers la surface de roulement (10) par une incision (21) s'ouvrant sur cette surface de roulement (10), cette incision (21) s'ouvrant dans la au moins une partie cachée (22) de manière à être en décalage par rapport à l'une des parois (221) délimitant la au moins une partie cachée (22) pour former au moins un pont de matière (211) situé radialement au-dessus de ladite au moins une partie cachée (22), cette bande de roulement (1) comprenant en outre une pluralité de rainures ouvertes (4) à neuf sur la surface de roulement (10), ces rainures ouvertes (4) ayant à neuf une profondeur Pg et une largeur moyenne Lg sur la surface de roulement (10) et comprenant deux extrémités, ces rainures ouvertes (4) s'ouvrant à au moins une de leurs extrémités dans la au moins une découpure évolutive (2) pour former une région de connexion (41, 42), la bande de roulement (1) étant **caractérisée en ce qu'**une protubérance (5) est formée localement sur une paroi (221) de la au moins une partie cachée (22) de ladite au moins une découpure évolutive (2) dans au moins 50% des régions de connexion (41, 42), chaque protubérance (5) s'étendant sur toute la hauteur Hc de la au moins une partie cachée (22) et sur une longueur totale L mesurée dans la direction principale de la au moins une partie cachée (22) et sur une épaisseur maximale Ep de manière à servir de soutien au pont de matière (211) situé radialement au-dessus de la au moins une partie cachée (22) dans la région de connexion (41, 42), tout en conservant une ouverture (230) de section différente de zéro sur la au moins une partie cachée (22) mettant en communication la rainure ouverte (4) et la au moins une partie cachée (22).

2. Bande de roulement (1) selon la revendication 1 dans laquelle ladite protubérance (5) est formée dans chaque région de connexion (41, 42) de la bande de roulement (1).

3. Bande de roulement (1) selon l'une des revendications 1 ou 2 **caractérisée en ce que** l'épaisseur maximale Ep de chaque protubérance (5) est au moins égale à la largeur du pont de matière (211) situé radialement au-dessus de la au moins une partie cachée (22) dans la région de connexion (41, 42) respective.

4. Bande de roulement (1) selon l'une quelconque des revendications 1 à 3 **caractérisée en ce que** chaque protubérance (5) présente une section transversale telle que l'ouverture (230) sur la au moins une partie cachée (22) est au moins égale à 20% de la surface transversale de la au moins une partie cachée (22).

5. Bande de roulement (1) selon l'une quelconque des revendications 1 à 4 **caractérisée en ce que** chaque protubérance (5) comprend des parties latérales (51, 52) se prolongeant de part et d'autre de la région de connexion (41, 42) respective pour former des parties d'épaisseur variable afin de limiter les perturbations de l'écoulement dans la au moins une partie cachée (22) de la au moins une découpure évolutive (2).

6. Bande de roulement (1) selon l'une quelconque des revendications 1 à 5 **caractérisée en ce qu'**un pont de matière (6) est formé dans chaque rainure ouverte (4) sur la surface de roulement (10), chaque pont de matière (6) ayant une hauteur Hp comprise entre 30% et 70% de la profondeur Pg de la rainure ouverte (4) et une longueur Lp mesurée dans la direction de la rainure ouverte (4) qui est au plus égale à 75% de la longueur Lr de ladite rainure ouverte (4).

7. Bande de roulement (1) selon l'une quelconque des revendications 1 à 6 **caractérisée en ce qu'**au moins une découpure évolutive (2) comprend une partie cachée (22) qui est ondulante dans la direction de l'épaisseur de la bande de roulement (1).

## Patentansprüche

1. Laufstreifen (1) für einen Schwerlastfahrzeugreifen, der eine Lauffläche (10) im Neuzustand aufweist, die dazu bestimmt ist, beim Fahren mit einer Fahrbahn in Kontakt zu kommen, wobei dieser Laufstreifen (1) wenigstens einen evolutiven Ausschnitt (2) mit einer maximalen Tiefe Pc umfasst, wobei der wenigstens eine evolutive Ausschnitt (2) wenigstens einen verdeckten Teil (22) im Inneren des Laufstreifens (1) aufweist, wobei der wenigstens eine verdeckte Teil (22) eine Höhe Hc aufweist und von einander gegenüberliegenden Wänden (221, 222) begrenzt wird, die einen Abstand voneinander haben, der gleich einer maximalen Breite Lc ist, wobei der wenigstens eine verdeckte Teil (22) zur Lauffläche (10) hin durch einen Einschnitt (21) verlängert ist, der sich auf dieser Lauffläche (10) öffnet, wobei sich dieser Einschnitt (21) in dem wenigstens einen verdeckten Teil (22) so öffnet, dass er in Bezug auf eine der Wände (221), die den wenigstens einen verdeckten Teil (22) begrenzen, versetzt ist, um wenigstens eine Materialbrücke (211) zu bilden, die sich radial oberhalb des wenigstens einen verdeckten Teils (22) befindet, wobei dieser Laufstreifen (1) außerdem mehrere offene Rillen (4) im Neuzustand auf der Lauffläche (10) umfasst, wobei diese offenen Rillen (4) im Neuzustand eine Tiefe Pg und eine mittlere Breite Lg auf der Lauffläche (10) aufweisen und zwei Enden umfassen, wobei sich diese offenen Rillen (4) an wenigstens einem ihrer Enden in den wenigstens einen evolutiven Ausschnitt (2) öffnen, um einen Verbindungsbereich (41, 42) zu bilden, wobei der Laufstreifen (1) **dadurch gekennzeichnet ist, dass** ein Vorsprung (5) lokal an einer Wand (221) des wenigstens einen verdeckten Teils (22) des wenigstens einen evolutiven Ausschnitts (2) in wenigstens 50 % der Verbindungsbereiche (41, 42) ausgebildet ist, wobei sich jeder Vorsprung (5) über die gesamte Höhe Hc des wenigstens einen verdeckten Teils (22) und über eine Gesamtlänge L, gemessen in der Hauptrichtung des wenigstens einen verdeckten Teils (22), und über eine maximale Dicke Ep erstreckt, um so als Abstützung für die Materialbrücke (211), die sich radial oberhalb des wenigstens einen verdeckten Teils (22) befindet, in dem Verbindungsbereich (41, 42) zu dienen, bei gleichzeitiger Beibehaltung einer Öffnung (230) mit von null verschiedenem Querschnitt auf dem wenigstens einen verdeckten Teil (22), die zwischen der offenen Rille (4) und dem wenigstens einen verdeckten Teil (22) eine Verbindung herstellt.

2. Laufstreifen (1) nach Anspruch 1, wobei der Vorsprung (5) in jedem Verbindungsbereich (41, 42) des Laufstreifens (1) ausgebildet ist.

3. Laufstreifen (1) nach einem der Ansprüche 1 oder 2, **dadurch gekennzeichnet, dass** die maximale Dicke Ep jedes Vorsprungs (5) mindestens gleich der Breite der Materialbrücke (211) ist, die sich radial oberhalb des wenigstens einen verdeckten Teils (22) in dem jeweiligen Verbindungsbereich (41, 42) befindet.

4. Laufstreifen (1) nach einem der Ansprüche 1 bis 3, **dadurch gekennzeichnet, dass** jeder Vorsprung (5) einen solchen Querschnitt aufweist, dass die Öffnung (230) auf dem wenigstens einen verdeckten Teil (22) wenigstens gleich 20 % der Querschnittsfläche des wenigstens einen verdeckten Teils (22) ist.

5. Laufstreifen (1) nach einem der Ansprüche 1 bis 4, **dadurch gekennzeichnet, dass** jeder Vorsprung (5) seitliche Teile (51, 52) umfasst, die sich beiderseits des jeweiligen Verbindungsbereichs (41, 42) erstrecken, um Teile mit variabler Dicke zu bilden, um die Störungen der Strömung in dem wenigstens einen verdeckten Teil (22) des wenigstens einen evolutiven Ausschnitts (2) zu begrenzen.

6. Laufstreifen (1) nach einem der Ansprüche 1 bis 5, **dadurch gekennzeichnet, dass** eine Materialbrücke (6) in jeder offenen Rille (4) auf der Lauffläche (10) ausgebildet ist, wobei jede Materialbrücke (6) eine Höhe Hp, die zwischen 30% und 70 % der Tiefe Pg der offenen Rille (4) liegt, und eine in der Richtung der offenen Rille (4) gemessene Länge Lp, die höchstens gleich 75 % der Länge Lr der offenen Rille (4) ist, aufweist.

7. Laufstreifen (1) nach einem der Ansprüche 1 bis 6, **dadurch gekennzeichnet, dass** wenigstens ein evolutiver Ausschnitt (2) einen verdeckten Teil (22) umfasst, welcher in der Richtung der Dicke des Laufstreifens (1) wellenförmig ist.

## Claims

1. Tread (1) for a heavy-duty vehicle tyre having, when new, a tread surface (10) intended to come into contact with a roadway during running, this tread comprising at least one evolving cut (2) of maximum depth Pc, the at least one evolving cut (2) comprising at least one part (22) hidden inside the tread, the at least one hidden part (22), of height Hc, and delimited by opposing walls (221, 222) distant from one another by a maximum width Lc, the at least one hidden part (22) being extended towards the tread surface (10) by a sipe (21) opening onto this tread surface (10), this sipe (21) opening into the at least one hidden part (22) in such a way as to be offset from one of the walls (221) delimiting the at least one hidden part in order to form at least one bridge of material situated radially over the at least one hidden part (22), this tread (1) further comprising a plurality of grooves (4) open when new onto the tread surface (10), these open grooves (4) having, when new, a depth Pg and a mean width Lg on the tread surface (10) and comprising two ends, these open grooves (4) opening at least at one of their ends into the at least one evolving cut (2) to form a connecting region (41, 42), the tread (1) being **characterized in that** a protuberance (5) is formed locally on a wall (221) of the at least one hidden part (22) of the at least one evolving cut (2) in at least 50% of the connecting regions (41, 42), each protuberance (5) extending over the entire height Hc of the at least one hidden part (22) and over a total length L measured in the main direction of the at least one hidden part (22) and over a maximum thickness Ep so as to act as a support for the bridge of material (211) situated radially over the at least one hidden part (22) in the connecting region (41, 42), while keeping an opening (230) with a section different from zero on the at least one hidden part (22), placing the transverse open groove (4) and the at least one hidden part (22) in communication.

2. Tread (1) according to Claim 1, wherein said protuberance (5) is formed in each connecting region (41, 42) of the tread.

3. Tread according to one of Claims 1 and 2, **characterized in that** the maximum thickness Ep of each protuberance (5) is at least equal to the width of the bridge of material (211) situated radially over the at least one hidden part (22) in the connecting region (41, 42).

4. Tread according to any one of Claims 1 to 3, **characterized in that** each protuberance (5) has a transverse cross section that is such that the opening onto the at least one hidden part (22) is at least equal to 20% of the cross-sectional area of the at least one hidden part (22).

5. Tread according to any one of Claims 1 to 4, **characterized in that** each protuberance (5) comprises lateral parts (51, 52) extending on each side of the connecting region (41, 42) to form parts of variable thickness so as to limit the disruption to flow in the at least one hidden part (22) of the at least one evolving cut.

6. Tread according to any one of Claims 1 to 5, **characterized in that** a bridge of material (6) is formed in each groove (4) open onto the tread surface (10), this bridge of material (6) having a height Hp comprised between 30% and 70% of the depth Pg of the open groove (4) and a length Lp measured in the direction of the open groove (4) which is at most equal to 75% of the length Lr of said open groove (4).

7. Tread according to any one of Claims 1 to 6, **characterized in that** at least one evolving cut (2) comprises a hidden part (22) which is wavy in the direction of the thickness of the tread.
